# EUROPEAN PATENT SPECIFICATION

(11) **EP 3 478 423 B1**
(45) Date of publication and mention of the grant of the patent: **25.08.2021**
(21) Application number: 17736751.3
(22) Date of filing: 03.07.2017
(51) Int. Cl.: B07C 5/02, B65G 47/14

(54) **GEMSTONE SEPARATION**
VEREINZELUNG VON EDELSTEINEN
SÉPARATION DES PIERRES PRÉCIEUSES

(30) Priority: 04.07.2016 GB 201611653
(43) Date of publication of application: 08.05.2019
(73) Proprietor: De Beers UK Limited, London SW1Y 5AN (GB)
(72) Inventor: BOWE, John, Maidenhead Berkshire SL6 6JW (GB); PORTSMOUTH, Andrew, Maidenhead Berkshire SL6 6JW (GB)
(74) Representative: Talbot-Ponsonby, Daniel Frederick
(86) International application number: PCT/GB2017/051956
(87) International publication number: WO 2018/007795

(56) References cited:
- WO-A1-2014/067932
- GB-A- 2 162 828

## Description

### Technical Field

The present invention relates to a method and apparatus for separating gemstones. In particular, although not exclusively, the invention relates to separating a single gemstone from a bulk quantity of gemstones.

### Background

A bulk quantity or parcel of rough gemstones, such as diamonds, may be obtained as the output of a mining process, where it is referred to as a Run of Mine (RoM). Additionally, parcels may be obtained commercially. Typically, parcels of rough diamonds will have been sieved so that the particles contained therein are substantially within a specified size range. For example, a -7+5 RoM parcel of rough diamonds will largely comprise rough diamonds that will pass through a No. 7 sieve plate but will not pass through a No. 5 sieve plate. Such sieve plate sizes are a de facto standard in the diamond trade. GB2162828 describes a feeder comprising a pair of rolls which dispenses gemstones from a container onto a secondary feeder. WO2014/067932 discloses an apparatus comprising a hopper which dispenses gemstones one at a time onto a rotating disc.

While such a parcel is typically standardised to an extent with respect to size, the material contained therein may well vary in terms of clarity, colour, size and shape. The parcel may also contain stones which are synthetic or treated. Therefore, someone contemplating the purchase or sale of a parcel may have little idea of the fair price that should be agreed. The price will be driven by the value of the polished gemstones that can be manufactured from the parcel.

To value a parcel of rough diamonds, or even a parcel of polished stones, the purchaser must somehow inspect the parcel and form an opinion based on an appraisal of the goods. In order to do this, the various properties of each individual stone must be measured separately in some way. Measurement of a parcel containing a large number of diamonds is problematic, and it would be preferable to be able to separate out individual stones and provide diamonds individually to a measurement location.

### Summary

In accordance with the present invention there is provided an apparatus for separating gemstones according to claim 1. In particular, the apparatus comprises a transportation device for transporting a plurality of gemstones to a measurement location, a separation device for separating the gemstones from one another as they are transported to the measurement location and a deceleration and release device configured to decelerate each gemstone individually and then release it so that each gemstone accelerates away from a following gemstone as it leaves the deceleration and release device so as to increase the separation between the gemstones. The transportation device comprises a movable horizontal surface for supporting and transporting the gemstones thereon. The deceleration and release device comprises a pair of vertical rollers counter-rotating about substantially vertical axes and having roller surfaces in close proximity to or substantially touching each other and configured such that gemstones on the horizontal surface pass between the rollers where the roller surfaces touch each other

The separation device may comprise a series of cam surfaces located above and closely proximate to the horizontal surface, each cam surface being perpendicular to the horizontal surface and inclined to a direction of travel of the horizontal surface, so that the gemstones are pushed successively further from their initial line of travel by successive cams in the series. Successive cam surfaces may be inclined to the direction of travel of the horizontal surface by successively smaller angles.

The movable horizontal surface may comprise a rotatable disc. Successive cam surfaces may be configured to push gemstones successively further away from a centre of the disc. Each cam surface may have a lower edge substantially in contact with the moving horizontal surface.

A linear speed of the horizontal surface at the point where the gemstones pass between the rollers may be in the same direction as and greater than a linear speed of the touching roller surfaces, such that a gemstone passing between the rollers is slowed down by the rollers and subsequently accelerated away from a following gemstone on the horizontal surface. The ratio of the linear speed of the horizontal surface at the point where the gemstones pass between the rollers and the linear speed of the touching roller surfaces may be approximately 5:3. The roller surfaces may be resilient.

The apparatus may be configured so that gemstones transported on the horizontal surface contact the series of cams before the vertical rollers.

The apparatus may further comprise a sensor at the measurement location for identifying when a gemstone reaches the measurement location. The sensor may comprise a light curtain, and the apparatus may be configured to halt movement of the horizontal surface when a gemstone passes through the light curtain.

The measurement location may further comprise a detection device, configured to detect whether a single gemstone or multiple gemstones are present at the measurement location. Where a single gemstone is detected at the measurement location, the single gemstone may be removed from the disc and where multiple gemstones are detected at the measurement location, the multiple gemstones may remain on the disc so as to pass the separation device and deceleration and release device again. The single gemstone may be removed from the disc to a holding or dispensing location. This may be achieved by the use of a push device.

The apparatus may further comprise a single vertical roller proximate the edge of the disc for redirecting gemstones which have passed through the measurement location towards the centre of the disc.

The apparatus may further comprise a chute for delivering the gemstones onto the movable horizontal surface. The chute may comprise a pair of counter-rotating rollers separated by a gap narrow enough to prevent the gemstones from falling therethrough, but wide enough to allow fragments and chips to fall therethrough. The gap may have a width between 0.5 and 2 mm, preferably about 1 mm. The chute may be inclined to the horizontal at an angle between 5 and 20°, preferably about 10°.

The apparatus may further comprise a primary feeder, the primary feeder comprising a conveyor belt and one or more cam surfaces configured to deliver gemstones to the chute in single file. A hopper may be provided for retaining multiple gemstones and a pair of counter-rotating rollers for delivering the gemstones from the hopper to the primary feeder.

Also described herein is an apparatus for separating gemstones, the apparatus comprising a movable horizontal surface for transporting a plurality of gemstones to a measurement location, a series of cam surfaces located above and closely proximate to the horizontal surface, the series of cam surfaces configured to separate the gemstones from one another as they are transported to the measurement location.

Also described herein is an apparatus for separating gemstones, the apparatus comprising a movable horizontal surface for transporting a plurality of gemstones to a measurement location, a pair of counter-rotating vertical rollers having roller surfaces substantially touching each other and configured such that gemstones on the horizontal surface pass between the rollers where the roller surfaces touch each other, so as to separate the gemstones from one another or increase a separation between the gemstones.

In accordance with the present invention there is provided a method according to independent claim 15, in particular of delivering gemstones individually to a measurement location, the method comprising receiving a quantity of gemstones, transporting and supporting the gemstones towards a measurement location on a moveable horizontal surface, causing the gemstones to separate from one another as they are transported by means of controlling a path followed by the gemstones, and decelerating each gemstone at a deceleration and release device and releasing each gemstone from the deceleration and release device so as to accelerate away from a following gemstone and increase the separation between the gemstones. The deceleration and release device comprises a pair of vertical rollers counter-rotating about substantially vertical axes and having roller surfaces in close proximity to or substantially touching each other and configured such that gemstones on the horizontal surface pass between the rollers where the roller surfaces touch each other.

### Brief Description of the Drawings

Figure 1 is a perspective view of an apparatus for separating gemstones;
Figure 2 is a plan view of the apparatus of Figure 1;
Figure 3 is a plan view of an enlarged portion of the apparatus of Figure 1, comprising a rotatable disc;
Figure 4A is a plan view of an underside of an exemplary series of cams for use in the apparatus of Figure 1;
Figure 4B is a front perspective view of the cams of Figure 4A;
Figure 4C is a rear perspective view of the cams of Figure 4A;
Figure 4D is a plan view from above of the cams of Figure 4A;
Figure 4E is a side view of the cams of Figure 1;
Figure 5 is a plan view of an enlarged portion of the apparatus of Figure 1, comprising a chute;
Figure 6 is a perspective view of a hopper feeder and
Figure 7 is a schematic illustrating a method of separating gemstones.

### Detailed Description

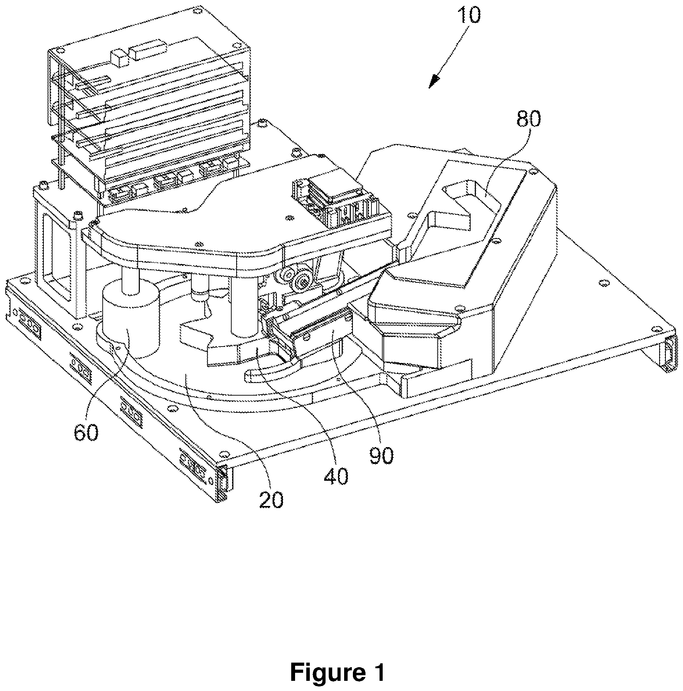

An apparatus for separating gemstones, such as diamonds, will now be described with reference to Figures 1 to 5. The apparatus comprises a transportation device for transporting a plurality of gemstones to a measurement location; a separation device for separating the gemstones from one another as they are transported to the measurement location; and a deceleration and release device configured to enable the each individual gemstone to accelerate away from its successor towards the measurement location so as to increase the separation between the gemstones. The gemstones may be rough or may already have been polished to at least some extent. It is envisaged that the apparatus may be configured to handle a wide range of gemstone shapes and sizes.

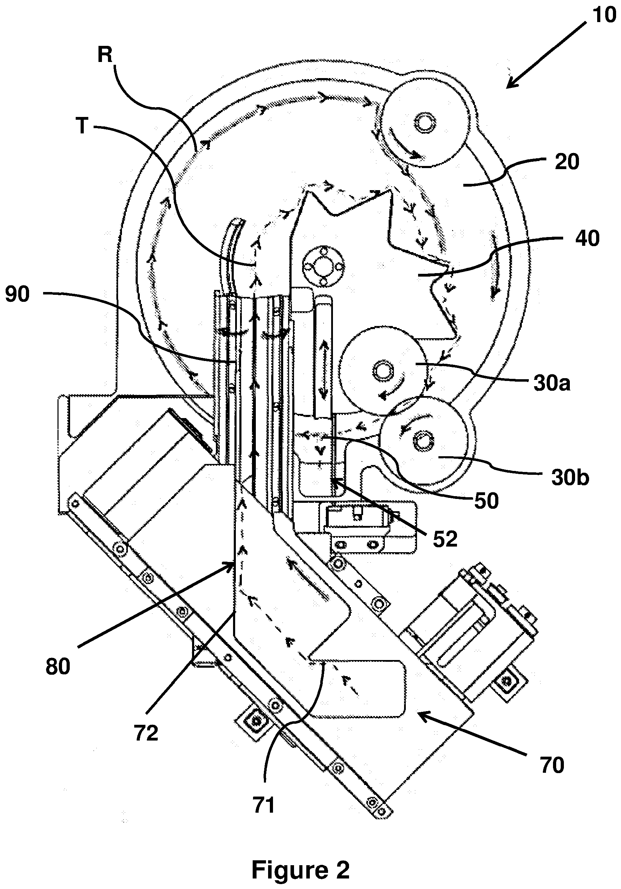

In the example shown in Figures 1 and 2, the transportation device comprises a movable horizontal surface for supporting and transporting the gemstones thereon. The horizontal surface is in the form of a rotatable disc 20. The separation device comprises a series of cam surfaces 40 located above and closely proximate to the horizontal surface 20, each cam surface being generally perpendicular to the horizontal surface 20 and inclined to a direction of travel of a stone on the horizontal surface 20, so that the gemstones are pushed successively further from their initial line of travel by successive cams in the series 40. As shown in the exemplary travel path T of Figure 2, the stones are pushed successively outwards on the disc 20. The deceleration and release device comprises a pair of rollers 30a, 30b counter-rotating about vertical axes and having roller surfaces in close proximity to or substantially touching each other and configured such that gemstones on the horizontal surface 20 pass between the rollers 30a, 30b where the roller surfaces touch each other. In one example the roller surfaces are resilient (e.g. foam) so that the axes of the rollers 30a, 30b are separated by less than the diameter of an individual roller, and the surfaces are deformed where they come into contact. The rollers rotate so that the touching surfaces move in the same direction as the direction of travel of the stone on the horizontal surface but at a lower speed than the horizontal surface.

With reference to the travel path indicated in Figure 2, gemstones are fed into the apparatus 10 via a hopper feeder (not shown in Figure 1) 70, which delivers gemstones into a primary feeder 80 and hence onto the surface of the rotatable disc 20 via a chute 90. Gemstones are transported on the surface of the disc 20 to a measurement location 50, such that they pass a separation device (the cams 40) and a deceleration and release device (vertical rollers 30a, 30b). The measurement location 50 comprises a detection device. The detection device detects whether a single gemstone or multiple gemstones are present at the measurement location. Where a single gemstone is determined to be present, the single gemstone is removed from the disc 20. Where more than one gemstone is determined to be present, the gemstones remain on the disc surface 20 so as to pass the separation device 40 and deceleration and release device 30a, 30b again.

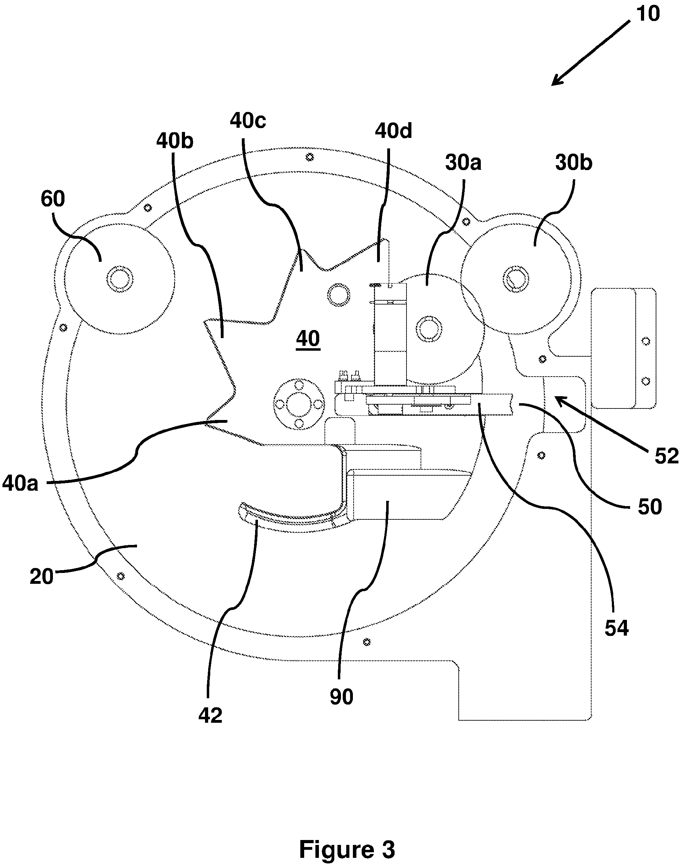

As can be seen in more detail with reference to Figure 3, the separation device 40 comprises a series of cams 40a, 40b, 40c, 40d. In this example, there are four cams 40a, 40b, 40c, 40d distributed around a central region of the rotating disc 20, forming a cam block 40 substantially in a centre region of the disc 20. The cam block 40 is stationary relative to the rotating disc 20. Four cams are preferable as a minimum to ensure separation, but it will be appreciated that a cam block comprising more or fewer cams could be employed.

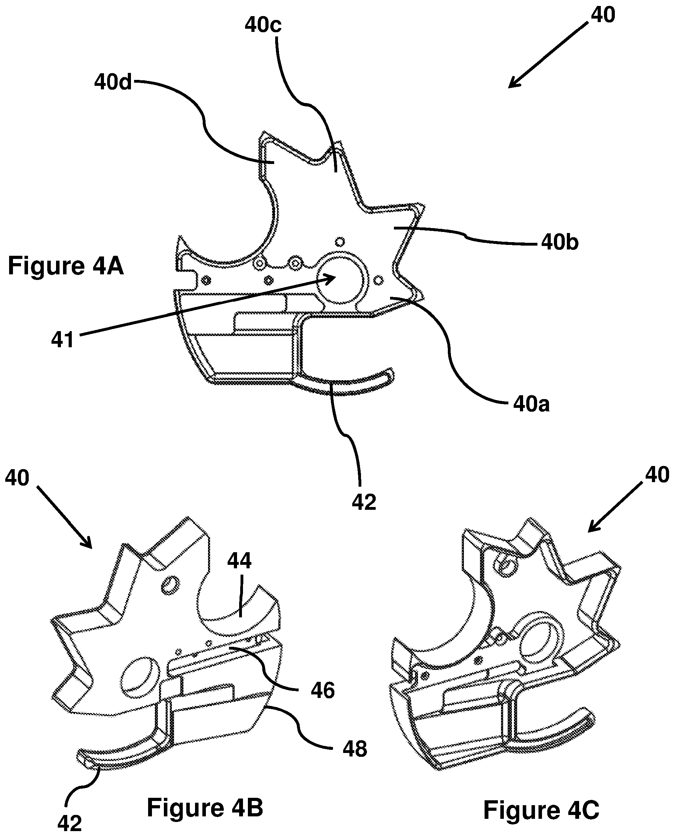

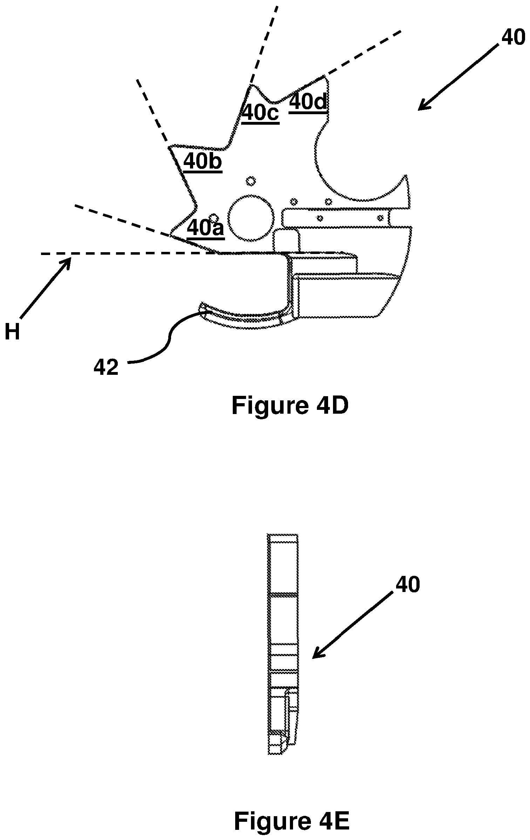

Successive cam surfaces 40a, 40b, 40c, 40d are configured to push gemstones successively further away from a centre of the disc 20. To achieve this, successive cam surfaces 40a, 40b, 40c, 40d are inclined to the direction of travel of the horizontal surface of the disc 20 by successively smaller angles, as will be discussed in more detail below with reference to Figure 4. Each cam surface 40a, 40b, 40c, 40d has a lower edge which is substantially in contact with the moving horizontal surface of the disc 20. This prevents gemstones from becoming lodged underneath the lower edge of the cam 40a, 40b, 40c, 40d. The underside of one or more of the cams 40a, 40b, 40c, 40d is hollowed out, in order to minimise contact with the disc 20 and therefore reduce wear on the disc surface. The cams 40a, 40b, 40c, 40d may comprise aluminium, an aluminium alloy, or similar hard material, such that the gemstones cannot become embedded in the cam surface 40a, 40b, 40c, 40d. As the disc 20 rotates in a clockwise direction, it can be seen that gemstones transported on the horizontal surface of the disc 20 contact the series of cams 40a, 40b, 40c, 40d before they come into contact with the vertical rollers 30a, 30b. It will be appreciated that, as each cam 40a, 40b, 40c, 40d pushes the stones away from the centre of the disc 20, the stones are moved onto a region of the horizontal surface 20 which is moving faster than the area from which they have come. In this embodiment, the first two cams 40a, 40b tend to force the stones into single file and the third 40c and fourth cams 40d tend to separate the stones. The series of cams 40a, 40b, 40c, 40d therefore has the overall effect of increasing the separation between the stones as they approach the rollers 30a, 30b.

With further reference to Figure 3, the deceleration and release device comprises a pair of motorised counter-rotating vertical rollers 30a, 30b having resilient roller surfaces substantially touching each other in such a way that they are compressed where they touch. In this example, the vertical rollers 30a, 30b thus effectively "overlap" to a degree. Gemstones on the horizontal surface of the rotating disc 20 pass between the rollers 30a, 30b where the roller surfaces touch each other. The linear speed of the roller surfaces 30a, 30b runs slightly slower than the linear speed of the portion of the disc 20 passing under the point where the rollers 30a, 30b overlap. In this illustrated example, the linear speed of the roller 30a, 30b surfaces is approximately 40% slower than the linear speed of the portion of the disc 20 which passes under the point where the rollers 30a, 30b overlap. For example, the disc 20 may run at a linear speed of 30mm/second at this point compared to a roller 30a, 30b linear speed of 18mm/second. A stone passing through the rollers 30a, 30b will therefore be slowed by the rollers 30a, 30b as it passes between them and will accelerate away from the rollers 30a, 30b as it is released, as will be discussed in more detail below. The roller speed is controllable so that the amount of deceleration can be adjusted to take account of the size of the stones and/or their number on the horizontal surface.

The vertical rollers 30a, 30b are preferably made of foam or other suitably resilient material, and configured such that gemstones do not become embedded in the rollers 30a, 30b. The rollers 30a, 30b are of sufficient height to be able to handle stones of a wide range of sizes. The lower ends of the vertical rollers 30a, 30b are substantially in contact with the surface of the rotating disc 20, so that gemstones cannot become trapped underneath the rollers 30a, 30b. The vertical rollers 30a, 30b are of sufficient width that they will come into contact with stones being transported at any point on the radius of the disc 20. As a stone contacts the rotating roller 30a, 30b surface, it is rotated towards the point where the rollers 30a, 30b touch or overlap. Each of the vertical rollers 30a, 30b rotates towards the other *i.e.* inwardly, towards the point at which the rollers 30a, 30b overlap.

As Figure 3 also illustrates, the apparatus 10 is provided with a single vertical roller 60 proximate the outer edge of the disc 20. This "recycle" roller 60 is for redirecting towards the centre of the disc 20 gemstones which have passed through the measurement location 50, as will be further discussed below. The "recycle" roller 60 may be motorised and is preferably made of a resilient material such as foam. The speed of the roller 60 is relatively unimportant, but the roller 60 must rotate in the opposite direction to the rotating disc 20 (in this example, in an anti-clockwise direction). The roller 60 is of sufficient height to be able to handle a wide range of gemstone sizes. A lower end of the roller 60 is substantially in contact with the surface of the rotating disc 20, so that gemstones cannot become trapped underneath the roller 60. The roller 60 width is selected such that stones which have passed through the measurement location 50 come into contact with the "recycle" roller 60 surface and are redirected towards the central cam block 40.

As illustrated in Figure 3, the disc 20 provides a circular transportation path along which the gemstones may be transported at a speed of approximately 30 mm/second to a measurement location 50. The measurement location 50 may include a sensor, as will be discussed in more detail below.

The rotating disc 20 may be made from fine machined hard plastic and may be configured to provide a suitably high friction co-efficient. A textured surface reduces the possibility of the gemstones slipping or rolling. In the example shown, the disc 20 rotates in a clockwise direction as seen from above and is configured to stop when an individual stone reaches the measurement location 50. The disc 20 is configured to start again once measurement is complete.

Gemstones are received onto a substantially central region of the disc 20 surface from the end of the chute 90, as the disc 20 rotates. As will be discussed further below, the stones are received from the chute 90 substantially in single file. As discussed with reference to Figure 3 above, the first 40a and second 40b cams also tend to force the stones into single file, such that the stones are in single file by the time they reach the rollers 30a, 30b.

As the disc 20 rotates the stones come into contact with the series of fixed cams 40a, 40b, 40c, 40d mounted just above the disc 20. As the disc 20 continues to rotate each cam 40a, 40b, 40c, 40d pushes the stones away from the central region of the disc 20 towards an outer region of the disc 20. Successive cam surfaces 40a, 40b, 40c, 40d are inclined to the direction of travel of the horizontal surface of the disc 20 by successively smaller angles and this arrangement of cams 40a, 40b, 40c, 40d pushes gemstones successively further away from the centre of the disc 20. In other words, the stones move further out from the centre of the disc 20 as they are transported in a clockwise direction from the chute 90 to the measurement location 50. This process naturally causes the gemstones to separate one from another as their average angular position with respect to the disc 20 is maintained while their radius increases.

Thus the apparatus 10 ultimately provides a stream of separated gemstones on the disc 20 surface, at a radius approximately determined by the outer surface of the last of the series of cams 40d. It will be appreciated that, typically, a plurality of gemstones is not fully separated until the stones have reached the measurement location 50 *i.e.* until they have passed through the deceleration and release device 30a, 30b. The series of cams 40a, 40b, 40c, 40d begins the separation process.

As the disc 20 continues to rotate in a clockwise direction, the gemstones are introduced to the deceleration and release device 30a, 30b, which in this example takes the form of vertically mounted motorised foam rollers 30a, 30b, as discussed above with reference to Figure 3. A gemstone passing between the foam rollers 30a, 30b is gripped and slowed down by the pair of rollers 30a, 30b as it passes between them. The gemstone is then released from the rollers 30a, 30b and subsequently accelerated away from a following gemstone on the horizontal surface of the rotating disc 20. The speed differential between the rollers 30a, 30b and the rotating disc 20 therefore provides a nominal gap or separation between the stones.

The optimal speed differential between the pair of vertical rollers 30a, 30b and the rotating disc 20 has been determined to be 10:6 disc:rollers. If the differential is too slow, gemstones will tend to pile up behind the vertical rollers 30a, 30b. The optimal ratio of speeds is linked to the overall speed of the apparatus 10.

Each individual gemstone thus arrives at the measurement location 50. With further reference to Figure 3, the measurement location 50 comprises a detection device, configured to detect whether a single gemstone or multiple gemstones are present at the measurement location 50.

A sensor 52 is provided proximal the measurement location 50. The sensor 52 identifies when a gemstone has passed it and has therefore reached or arrived at the measurement location 50. In this example, the sensor 52 comprises a laser light curtain 52. The stone blocks the light curtain 52 as it arrives at the measurement location 50. The sensor 52 is configured to halt movement of the rotating disc 20 when a gemstone is detected. The hopper feeder 70 rollers, vertical rollers 30a, 30b, recycle roller 60, chute rollers 92a, 92b and certain other moving parts of the apparatus 10 may also be halted.

Typically, the laser light curtain 52 is approximately 2 mm thick. Hence it is possible to determine the minimum gap that must exist between the gemstone at the measurement location 50 and any following gemstone.

An image of the gemstone at the measurement location 50 is then acquired by a detector (not shown). The detector may comprise a camera. The detector may be integral to the apparatus 10. Image processing is then used to determine if there are one or more discrete objects in the field of interest. The image processing may be carried out by a computer integral to the apparatus 10. Where a single gemstone is determined by image processing to be present at the measurement location 50, the single gemstone is removed from the disc 20; and where multiple gemstones (*i.e.* more than one gemstone) are detected at the measurement location 50, the multiple gemstones remain on the disc 20 and the disc 20 begins to rotate again. The multiple gemstones therefore pass the separation device 40 and deceleration and release device 30a, 30b again. The apparatus 10 provides a double feed detection system and prevents more than one stone from being removed from the surface of the disc 20 at any one time. The detector may also measure one of more properties of the gemstones such as size, colour *etc.* so that the stones can be sorted by this property after removal from the disc 20.

As shown in Figure 3, the apparatus 10 further comprises a device configured to remove a single gemstone from the disc 20 when multiple gemstones are not detected at the measurement location. The device may comprise a push device 54, such as a "nudge" mechanism or motorised rack, which pushes the single gemstone off the disc 20 through a feed aperture and into a holding location (not shown) below, while the disc 20 is halted. Alternatively, the removal device may comprise a vacuum nozzle, for example. The holding location may comprise a hold gate. Alternatively, the single gemstone may be removed from the surface of the disc 20 to a dispensing location. The dispensing location may be determined by any measurement or measurements taken at the measurement location 50.

As discussed above, if there are multiple stones in the field of interest the rotating disc 20, the moving parts of the apparatus 10 which were halted will commence rotating/moving again and the disc 20 will move the multiple stones beyond the measurement location 50. The multiple "recycled" stones will be transported in a clockwise direction on the surface of the disc 20 back towards the location where gemstones are dispensed onto the disc 20 surface by the chute 90. This is indicated in Figure 2 by travel path R. The "recycled" stones will come into contact with the single "recycle" roller 60, as described above, and will be redirected towards a central region of the disc 20. They will then come into contact with the series of cams 40a, 40b, 40c, 40d and ultimately be transported in a clockwise direction back through the pair of vertical rollers 30a, 30b to the measurement location 50.

Once a single gemstone has been fed into the hold gate the system is primed. A single gemstone can then be requested on demand from an external system (not described here). Further evaluation of the individual stone by measurement of at least one of its properties may then take place in addition to, or instead of, measurement while still on the disc 20 at the measurement location 50.

Figures 4A, 4B, 4C, 4D and 4E show an exemplary series of cams 40a, 40b, 40c, 40d for use with the apparatus of Figure 1. It will be appreciated that the measurements and angles shown in this illustrated example may be varied and still fall within the scope of the invention.

As previously discussed with reference to Figure 3, the cam block 40 comprises four cam surfaces, described herein as first 40a, second 40b, third 40c and fourth 40d can surfaces respectively. The cam surfaces 40a, 40b, 40c, 40d are inclined to the direction of travel of the horizontal surface of the disc by successively smaller angles.

Figure 4A illustrates an exemplary cam block 40 from underneath. In other words, when located on top of the rotating disc, the sequence of the cam surfaces 40a, 40b, 40c, 40d will appear as shown in Figure 4B. It can be seen that the distance of the outermost point of the cam surface from a centre point 41 of the cam block 40 increases for each successive cam 40a, 40b, 40c, 40d.

This increase in overall distance from the centre point 41 of the cam block 40 serves to push stones travelling on the rotating disc further away from the centre of the disc as they encounter each successive cam surface 40a, 40b, 40c, 40d.

Figure 4D illustrates the exemplary cam block of Figure 4A from above. In this example the angle of inclination from a horizontal line H of the first cam surface 40a is approximately 20°; the angle of inclination from the horizontal line H of the second cam surface 40b is approximately 65°; the angle of inclination from the horizontal line H of the third cam surface 40c is approximately 110° and the angle of inclination from the horizontal line H of the fourth and final cam surface 40d is approximately 150° (or 30°). These angles have been found to be particularly beneficial, although it will be appreciated that other arrangements may be possible.

Therefore, in relation to the direction of travel of the horizontal surface of the disc, the cam surfaces 40a, 40b, 40c, 40d are inclined by successively smaller angles. This causes the stones travelling on the rotating disc surface to be pushed further towards an outer radius of the rotating disc. The series of cam surfaces 40a, 40b, 40c, 40d provided by the apparatus begins the process of separating the stones.

The cam block 40 in this example also comprises a curved guiding portion 42 located in use near the point at which stones are discharged onto the disc surface from the primary feeder 80. This guiding portion 42 serves to direct the stones towards the first cam surface 40a as they emerge from the chute. It also assists to prevent stones which are moving beyond the measurement point from coming into contact with any stones being dispensed from the primary feeder 80.

As shown in Figure 4B, the exemplary cam block 40 is further shaped in a region 44 beyond the last cam surface 40d to accommodate one of the pair of vertical rollers 30a, 30b and in a further region 46 to accommodate the device configured to remove a single gemstone from the disc, which in this example comprises a push device or nudge bar. Beyond this region 46, the cam block 40 is shaped to present a substantially curved surface 48 such that stones passing beyond the measurement point are directed back towards the first cam surface and/or "recycle" roller.

As illustrated best by Figure 4C, the underside of the cam block 40 is substantially hollowed out, in order to minimise contact with the rotating disc and therefore reduce wear on the disc surface.

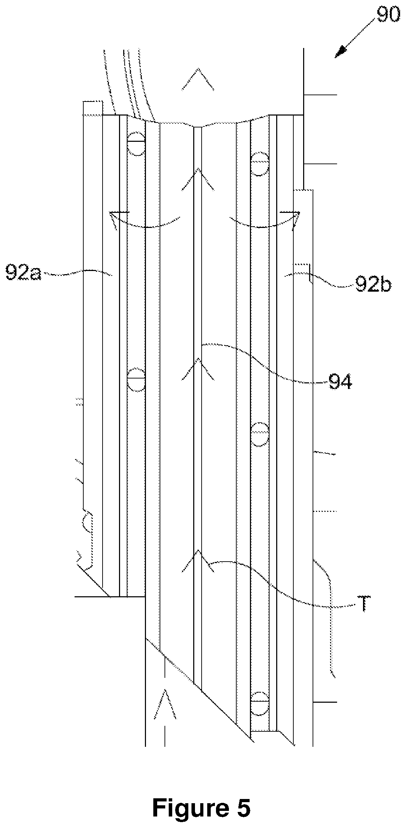

As illustrated in Figure 5, gemstones are delivered onto a central region of the rotating disc 20 by means of a chute 90. The chute 90 receives gemstones from the primary feeder 80 substantially in single file, as will be discussed below.

The chute 90 comprises a pair of counter-rotating rollers 92a, 92b separated by a gap 94 narrow enough to prevent the gemstones from falling therethrough, but wide enough to allow fragments and chips to fall therethrough. In this example, the gap 94 has a width between 0.5 and 2 mm, preferably about 1 mm. This ensures that any small fragments, chips and dust are removed. This may be desirable in order to prevent small particles from being deposited onto the disc surface 20 where they may cause scratching, jamming or other damage. The width of the gap 94 may be adjusted in order to specify the size of the particle to be removed. Typically, a catch tray (not shown) is positioned vertically below the gap 94 to catch particles which have fallen through the gap 94.

The counter rotating rollers 92a, 92b are motorised and are positioned side by side on either side of the travel path T of the gemstones. The rollers 92a, 92b are preferably made of steel. This avoids gemstones or other material from becoming embedded in the rollers 92a, 92b. They are mounted with a decline angle of approximately 10 degrees. Gemstones only progress along the chute 90 when the counter rotating rollers 92a, 92b are moving.

The chute 90 is inclined to the horizontal at an angle between 5 and 20°, preferably about 10°. The degree of inclination is configured to ensure that the gemstones leave the chute 90 and are deposited onto a substantially central region of the rotating disc 20. The surface of the chute 90 may be configured to assist in this respect. Preferably, the end of the chute 90 from which the gemstones fall does not make contact with the rotating disc 20 to avoid wear. In this illustrated example, a gap of approximately 15mm is provided between the surface of the disc 20 and the end of the chute 90.

In an alternative embodiment (not shown here) a second laser light curtain is provided substantially at the point where gemstones fall onto the rotating disc 20 from the chute 90. This second light curtain therefore determines when a single stone leaves the chute 90. The speed of the hopper feeder 70 rollers may then be configured such that, as a single stone is removed from the rotating disc 20 by the removal device 54, a single stone is dispensed onto the rotating disc 20 from the chute 90. This "one stone off, one stone on" arrangement ensures that the total number of stones on the rotating disc 20 at any one time is limited.

The gemstones are delivered to the chute 90 by a primary feeder 80, not shown here, comprising a conveyor belt and one or more cam surfaces 71, 72. The primary feeder 80 is configured to deliver gemstones to the chute 90 substantially in single file. The gemstones come into contact with the cam surfaces 71, 72 of the primary feeder 80 as they are transported along the conveyor belt towards the chute 90, and are realigned such that they enter the chute 90 one at a time. The cam surfaces 71, 72 act to guide the stones around a series of acceleration and deceleration points which arrange the stones in single file. This ensures a smooth flow of gemstones along the chute 90 and hence onto the disc 20 surface.

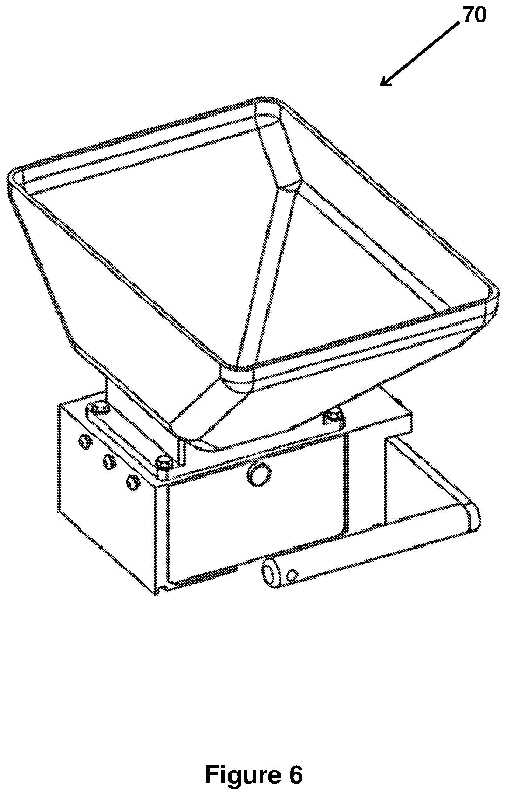

A plurality of gemstones is introduced to the primary feeder 80 via a hopper feeder 70, illustrated in Figure 6 and discussed with reference to Figures 1 and 2 above. The hopper 70, which may be a low profile, moulded plastic or 3D printed hopper, is configured to accept a pre-sized portion of gemstones or other discrete objects. In use, the stones will be gently poured into the hopper 70 from a sample pot, parcel or similar vessel. The proportions and material of the hopper 70 are therefore selected to ensure minimum abrasion between the rough diamonds.

The hopper feeder 70 comprises a pair of motorised counter-rotating rollers (not shown here), preferably made of foam. At the base of the hopper 70 a gap is provided through which the stones will fall into a well provided between the pair of co-operating longitudinal rollers. The rollers are arranged to rotate in opposite directions so as to gradually draw the stones in the well between and through the rollers. The rollers have highly resilient surfaces in which the stones become embedded, without opening a gap between the rollers. The speed of the rollers is configured to separate out the stones so that preferably only a single stone is permitted to pass through at any particular time. This separation ensures that the primary feeder 80 is not flooded with too many stones at once and reduces the time the stones are in contact with each other to minimise the risk of abrasion.

The rollers of the hopper feeder 70 are configured to rotate only when the transportation device, *i.e.* the rotating disc 20, is moving. Synchronisation of the hopper 70 rollers and the disc 20 avoids clumping. The speed of the hopper feeder 70 rollers controls the speed at which gemstones fall onto the rotating disc. The speed of the hopper feeder 70 may be adjusted to cater for different size bands of stones.

The combination of the hopper feeder 70, primary feeder 80 and chute 90 ensure that gemstones fall onto the rotating disc in a monolayer and substantially one at a time. This helps to speed up the subsequent separation process.

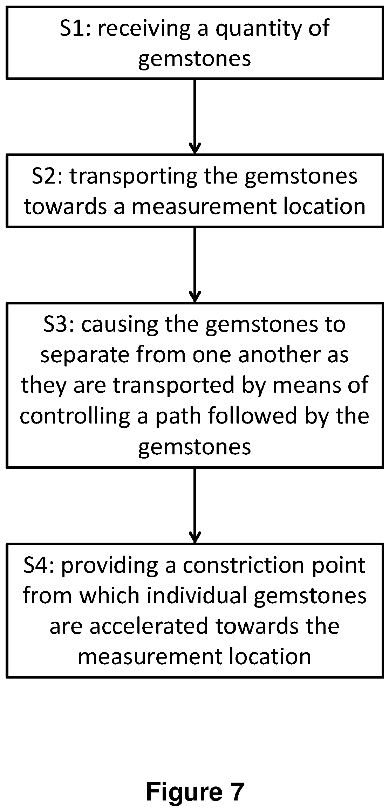

Figure 7 is a schematic illustrating a method of separating gemstones. The method comprises the following steps:
S1: receiving a quantity of gemstones;
S2: transporting the gemstones towards a measurement location;
S3: causing the gemstones to separate from one another as they are transported by means of controlling a path followed by the gemstones; and
S4: providing a constriction point from which individual gemstones are accelerated towards the measurement location.

It will be appreciated by the person skilled in the art that various modifications may be made to the above described embodiment, without departing from the scope of the present invention.

In an embodiment, the apparatus may comprise a movable horizontal surface for transporting a plurality of gemstones to a measurement location and a series of cam surfaces located above and closely proximate to the horizontal surface, the series of cam surfaces configured to separate the gemstones from one another as they are transported to the measurement location.

In an alternative embodiment, the apparatus may comprise a movable horizontal surface for transporting a plurality of gemstones to a measurement location; and a pair of counter-rotating vertical rollers having roller surfaces substantially touching each other and configured such that gemstones on the horizontal surface pass between the rollers where the roller surfaces touch each other, so as to separate the gemstones from one another or increase a separation between the gemstones.

Although the apparatus and methods above refer to the separation of diamonds, they may also be used for the separation of other discrete items.

The apparatus and methods described above are capable of processing a bulk parcel of stones to provide a single gemstone at an initial measurement location. The individual stone may then be transferred to further measurement locations so that its properties (colour, size, clarity, cut and type) may be evaluated. Any information regarding the individual stone which is provided at the initial measurement location may be stored so that it can be used in this evaluation.

The apparatus can be configured to generate a very low number of multiple feeds, less than 1 in 1000, which leads to a reduction in the number of manual inspection steps required. The number of rejected" stones which have to pass around the rotating disc again is also reduced. The apparatus is of a modular design and can therefore be used in other machines or systems which require a guaranteed single stone delivery.

## Claims

1. An apparatus (10) for separating gemstones, the apparatus comprising:
a transportation device (20) for transporting a plurality of gemstones to a measurement location (50); wherein the transportation device (20) comprises a movable horizontal surface (20) for supporting and transporting the gemstones thereon;
a separation device (40) for separating the gemstones from one another as they are transported to the measurement location; and
a deceleration and release device (30a,30b) configured to decelerate each gemstone and then release it so that each gemstone accelerates away from a following gemstone as it leaves the deceleration and release device so as to increase the separation between the gemstones;
wherein the deceleration and release device (30a,30b) comprises a pair of vertical rollers (30a,30b) counter-rotating about substantially vertical axes and having roller surfaces in close proximity to or substantially touching each other and configured such that gemstones on the horizontal surface (20) pass between the rollers where the roller surfaces touch each other.

2. The apparatus of claim 1, wherein the moveable horizontal surface comprises a rotatable disc (20).

3. The apparatus of claim 2, wherein the separation device (40) comprises a series of cam surfaces (40) located above and closely proximate to the horizontal surface (20), each cam surface being perpendicular to the horizontal surface and inclined to a direction of travel of the horizontal surface, so that the gemstones are pushed successively further from their initial line of travel by successive cams in the series.

4. The apparatus of claim 3, wherein successive cam surfaces (40) are inclined to the direction of travel of the horizontal surface (20) by successively smaller angles, and are optionally configured to push gemstones successively further away from a centre of the disc (20).

5. The apparatus of claim 3 or 4, wherein each cam surface (40) has a lower edge substantially in contact with the moving horizontal surface (20).

6. The apparatus of any preceding claim, configured so that a linear velocity of the horizontal surface (20) at the point where the gemstones pass between the rollers (30a,30b) is in the same direction as and greater than a linear velocity of the touching roller surfaces, such that a gemstone passing between the rollers is slowed down by the rollers and subsequently accelerates away from the following gemstone on the horizontal surface, and/or wherein the roller surfaces are resilient.

7. The apparatus of claim 6, wherein the ratio of the linear velocity of the horizontal surface (20) at the point where the gemstones pass between the rollers (30a,30b) and the linear velocity of the touching roller surfaces is approximately 5:3.

8. The apparatus of claim 6 or 7, configured so that gemstones transported on the horizontal surface (20) contact the series of cams (40) before the vertical rollers (30a,30b).

9. The apparatus of any preceding claim, further comprising a sensor (52) at the measurement location (50) for identifying when a gemstone reaches the measurement location, wherein the sensor optionally comprises a light curtain (52), and is configured to halt movement of the horizontal surface (20) when a gemstone passes through the light curtain.

10. The apparatus of claim 9 when appended directly or indirectly to claim 2, wherein the measurement location (50) further comprises a detection device, configured to detect whether a single gemstone or multiple gemstones are present at the measurement location, and wherein the apparatus is optionally configured such that:
where a single gemstone is detected at the measurement location, the single gemstone is removed from the disc (20); and
where multiple gemstones are detected at the measurement location, the multiple gemstones remain on the disc so as to pass the separation device (40) and deceleration and release device again (30a,30b).

11. The apparatus of claim 10, wherein the single gemstone is removed from the disc (20) to a holding or dispensing location, and/or wherein the apparatus further comprises a push device configured to push a single gemstone off the disc when multiple gemstones are not detected at the measurement location (50), and/or wherein the apparatus further comprises a single vertical roller (60) proximate the edge of the disc for redirecting gemstones which have passed through the measurement location towards the centre of the disc.

12. The apparatus of any preceding claim, further comprising a chute (90) for delivering the gemstones onto the movable horizontal surface (20).

13. The apparatus of claim 12, wherein the chute comprises a pair of counter-rotating rollers (92a,92b) separated by a gap (94) narrow enough to prevent the gemstones from falling therethrough, but wide enough to allow fragments and chips to fall therethrough, and wherein the gap optionally has a width between 0.5 and 2 mm, preferably about 1 mm, and the chute is optionally inclined to the horizontal at an angle between 5 and 20°, preferably about 10°.

14. The apparatus of claim 12 or 13, further comprising a primary feeder (80), the primary feeder comprising a conveyor belt and one or more cam surfaces (71,72) configured to deliver gemstones to the chute (90) in single file, and optionally further comprising a hopper feeder (70) comprising a hopper for retaining multiple gemstones and a pair of counter-rotating rollers for delivering the gemstones from the hopper to the primary feeder.

15. A method of delivering gemstones individually to a measurement location (50), the method comprising:
receiving a quantity of gemstones;
transporting and supporting the gemstones towards a measurement location (50) on a moveable horizontal surface (20);
causing the gemstones to separate from one another as they are transported by means of controlling a path followed by the gemstones; and
decelerating each gemstone at a deceleration and release device (30a,30b) and releasing each gemstone from the deceleration and release device so as to accelerate away from a following gemstone, said deceleration and release device comprising a pair of vertical rollers (30a, 30b) counter-rotating about substantially vertical axes and having roller surfaces in close proximity to or substantially touching each other and configured such that gemstones on the horizontal surface (20) pass between the rollers where the roller surfaces touch each other.

## Patentansprüche

1. Vorrichtung (10) zum Vereinzeln von Edelsteinen, wobei die Vorrichtung Folgendes umfasst:
eine Beförderungsvorrichtung (20) zum Befördern einer Vielzahl von Edelsteinen zu einer Messposition (50), wobei die Beförderungsvorrichtung (20) eine bewegliche horizontale Fläche (20) zum Tragen und Befördern der Edelsteine darauf umfasst,
eine Vereinzelungsvorrichtung (40) zum Vereinzeln der Edelsteine voneinander, wenn sie zu der Messposition befördert werden, und
eine Verzögerungs- und Freigabevorrichtung (30a, 30b), die dafür konfiguriert ist, jeden Edelstein zu verzögern und ihn danach freizugeben, so dass sich jeder Edelstein weg von einem folgenden Edelstein beschleunigt, wenn er die Verzögerungs- und Freigabevorrichtung verlässt, um so die Vereinzelung zwischen den Edelsteinen zu steigern,
wobei die Verzögerungs- und Freigabevorrichtung (30a, 30b) ein Paar von vertikalen Rollen (30a, 30b) umfasst, die sich um im Wesentlichen vertikale Achsen gegenläufig drehen und Rollenflächen in enger Nähe zueinander, oder die einander im Wesentlichen berühren, aufweisen und derart konfiguriert sind, dass Edelsteine auf der horizontalen Fläche (20) zwischen den Rollen hindurchgehen, da wo die Rollenflächen einander berühren.

2. Vorrichtung nach Anspruch 1, wobei die bewegliche horizontale Fläche eine drehbare Scheibe (20) umfasst.

3. Vorrichtung nach Anspruch 2, wobei die Vereinzelungsvorrichtung (40) eine Reihe von Nockenflächen (40) umfasst, die oberhalb und dicht nahe der horizontalen Fläche (20) angeordnet sind, wobei jede Nockenfläche senkrecht zu der horizontalen Fläche und zu einer Bewegungsrichtung der horizontalen Fläche geneigt ist, so dass die Edelsteine nacheinander durch aufeinanderfolgende Nocken in der Reihe aus ihrer anfänglichen Bewegungslinie weitergeschoben werden.

4. Vorrichtung nach Anspruch 3, wobei aufeinanderfolgende Nockenflächen (40) um sukzessiv kleinere Winkel zu der Bewegungsrichtung der horizontalen Fläche (20) geneigt sind und wahlweise dafür konfiguriert sind, Edelsteine nacheinander weiter weg von einer Mitte der Scheibe (20) zu schieben.

5. Vorrichtung nach Anspruch 3 oder 4, wobei jede Nockenfläche (40) eine untere Kante im Wesentlichen in Berührung mit der beweglichen horizontalen Fläche (20) aufweist.

6. Vorrichtung nach einem der vorhergehenden Ansprüche, die so konfiguriert ist, dass eine lineare Geschwindigkeit der beweglichen horizontalen Fläche (20) an dem Punkt, wo die Edelsteine zwischen den Rollen (30a, 30b) hindurchgehen, in der gleichen Richtung wie und größer als eine lineare Geschwindigkeit der sich berührenden Rollenflächen ist, so dass ein Edelstein, der zwischen den Rollen hindurchgeht, durch die Rollen verlangsamt wird und sich anschließend weg von dem folgenden Edelstein auf der horizontalen Fläche beschleunigt und/oder wobei die Rollenflächen elastisch sind.

7. Vorrichtung nach Anspruch 6, wobei das Verhältnis der linearen Geschwindigkeit der beweglichen horizontalen Fläche (20) an dem Punkt, wo die Edelsteine zwischen den Rollen (30a, 30b) hindurchgehen, und der linearen Geschwindigkeit der sich berührenden Rollenflächen ungefähr 5:3 beträgt.

8. Vorrichtung nach Anspruch 6 oder 7, die so konfiguriert ist, dass Edelsteine, die auf der horizontalen Fläche (20) befördert werden, die Reihe von Nocken (40) vor den vertikalen Rollen (30a, 30b) berühren.

9. Vorrichtung nach einem der vorhergehenden Ansprüche, die ferner einen Sensor (52) an der Messposition (50) umfasst, zum Identifizieren, wann ein Edelstein die Messposition erreicht, wobei der Sensor wahlweise einen Lichtvorhang (52) umfasst und dafür konfiguriert ist, eine Bewegung der horizontalen Fläche (20) anzuhalten, wenn ein Edelstein durch den Lichtvorhang hindurchgeht.

10. Vorrichtung nach Anspruch 9, wenn unmittelbar oder mittelbar abhängig von Anspruch 2, wobei die Messposition (50) ferner eine Erfassungsvorrichtung umfasst, die dafür konfiguriert ist, zu erfassen, ob ein einzelner Edelstein oder mehrere Edelsteine an der Messposition vorhanden sind, und wobei die Vorrichtung wahlweise derart konfiguriert ist, dass:
wenn ein einzelner Edelstein an der Messposition identifiziert wird, der einzelne Edelstein von der Scheibe (20) entfernt wird, und
wenn mehrere Edelsteine an der Messposition erfasst werden, die mehreren Edelsteine auf der Scheibe verbleiben, um so erneut die Vereinzelungsvorrichtung (40) und die Verzögerungs- und Freigabevorrichtung (30a, 30b) zu passieren.

11. Vorrichtung nach Anspruch 10, wobei der einzelne Edelstein von der Scheibe (20) zu einer Halte- oder Abgabeposition entfernt wird und/oder wobei die Vorrichtung ferner eine Schubvorrichtung umfasst, die dafür konfiguriert ist, einen einzelnen Edelstein von der Scheibe zu schieben, wenn nicht mehrere Edelsteine an der Messposition (50) erfasst werden, und/oder wobei die Vorrichtung ferner eine einzelne vertikale Rolle (60) nahe der Kante der Scheibe umfasst, zum Umleiten von Edelsteinen, die durch die Messposition hindurchgegangen sind, hin zu der Mitte der Scheibe.

12. Vorrichtung nach einem der vorhergehenden Ansprüche, die ferner eine Rutsche (90) zum Zuführen der Edelsteine auf die bewegliche horizontale Fläche (20) umfasst.

13. Vorrichtung nach Anspruch 12, wobei die Rutsche ein Paar von sich gegenläufig drehenden Rollen (92a, 92b) umfasst, die durch einen Spalt (94) getrennt werden, der schmal genug ist, um zu verhindern, dass die Edelsteine durch denselben fallen, aber breit genug, um zu ermöglichen, dass Bruchstücke und Splitter durch denselben fallen, und wobei der Spalt wahlweise eine Breite zwischen 0,5 und 2 mm, vorzugsweise etwa 1 mm, aufweist und die Rutsche wahlweise in einem Winkel zwischen 5 und 20°, vorzugsweise etwa 10°, zur Horizontalen geneigt ist.

14. Vorrichtung nach Anspruch 12 oder 13, die ferner einen primären Speiser (80) umfasst, wobei der primäre Speiser ein Förderband und eine oder mehrere Nockenflächen (71, 72) umfasst, die dafür konfiguriert sind, Edelsteine der Rutsche (90) in einer einzigen Reihe zuzuführen, und die wahlweise ferner einen Trichterspeiser (70) umfasst, der einen Trichter zum Zurückhalten mehrerer Edelsteine und ein Paar von sich gegenläufig drehenden Rollen zum Zuführen der Edelsteine von dem Trichter zu dem primären Speiser umfasst.

15. Verfahren zum einzelnen Zuführen von Edelsteinen zu einer Messposition (50), wobei das Verfahren Folgendes umfasst:
Empfangen einer Menge von Edelsteinen,
Befördern und Tragen der Edelsteine hin zu einer Messposition (50) auf einer beweglichen horizontalen Fläche (20),
Veranlassen, dass sich die Edelsteine voneinander vereinzeln, während sie befördert werden, mit Hilfe des Steuerns eines Weges, dem die Edelsteine folgen, und
Verzögern jedes Edelsteins an einer Verzögerungs- und Freigabevorrichtung (30a, 30b) und Freigeben jedes Edelsteins von der Verzögerungs- und Freigabevorrichtung, so dass er sich weg von einem folgenden Edelstein beschleunigt, wobei die Verzögerungs- und Freigabevorrichtung ein Paar von vertikalen Rollen (30a, 30b) umfasst, die sich um im Wesentlichen vertikale Achsen gegenläufig drehen und Rollenflächen in enger Nähe zueinander, oder die sich einander im Wesentlichen berühren, aufweisen und derart konfiguriert sind, dass Edelsteine auf der horizontalen Fläche (20) zwischen den Rollen hindurchgehen, da wo die Rollenflächen einander sich berühren.

## Revendications

1. Appareil (10) pour séparer des pierres précieuses, l'appareil comprenant :
un dispositif de transport (20) pour transporter une pluralité de pierres précieuses vers un emplacement de mesure (50) ; dans lequel le dispositif de transport (20) comprend une surface horizontale mobile (20) pour y supporter et transporter les pierres précieuses ;
un dispositif de séparation (40) pour séparer les pierres précieuses les unes des autres lors de leur transport vers l'emplacement de mesure ; et
un dispositif de décélération et de libération (30a, 30b) configuré pour décélérer chaque pierre précieuse et pour la libérer ensuite, de sorte que chaque pierre précieuse est accélérée à l'écart de la pierre précieuse suivante lors de sa sortie du dispositif de décélération et de libération, pour accroître ainsi la séparation entre les pierres précieuses ;
dans lequel le dispositif de décélération et de libération (30a, 30b) comprend une paire de rouleaux verticaux (230a, 30b) tournant en sens inverse autour d'axes sensiblement verticaux et comportant des surfaces de rouleaux à proximité étroite l'une de l'autre ou se contactant sensiblement l'une l'autre, et configurées de sorte que les pierres précieuses sur la surface horizontale (20) passent entre les rouleaux là où les surfaces de rouleaux se contactent l'une l'autre.

2. Appareil selon la revendication 1, dans lequel la surface horizontale mobile comprend un disque rotatif (20).

3. Appareil selon la revendication 2, dans lequel le dispositif de séparation (40) comprend une série de surfaces de came (40) disposées au-dessus et à proximité étroite de la surface horizontale (20), chaque surface de came étant perpendiculaire à la surface horizontale et étant inclinée vers une direction de déplacement de la surface horizontale, de sorte que les pierres précieuses sont successivement poussées davantage à l'écart de leur ligne initiale par les cames successives dans la série.

4. Appareil selon la revendication 3, dans lequel les surfaces de came successives (40) sont inclinées vers la direction de déplacement de la surface horizontale (20) par des angles successivement plus petits, et sont optionnellement configurées pour pousser les pierres précieuses successivement davantage à l'écart d'un centre du disque (20).

5. Appareil selon les revendications 3 ou 4, dans lequel chaque surface de came (40) comporte un bord inférieur sensiblement en contact avec la surface horizontale mobile (20).

6. Appareil selon l'une quelconque des revendications précédentes, configuré de sorte qu'une vitesse linéaire de la surface horizontale (20), au niveau du point où les pierres précieuses passent entre les rouleaux (30a, 30b), est dirigée dans la même direction et est supérieure à une vitesse linéaire des surfaces de rouleaux en contact, de sorte qu'une pierre précieuse passant entre les rouleaux est ralentie par les rouleaux et est ensuite accélérée à l'écart de la pierre précieuse suivante sur la surface horizontale, et/ou dans lequel les surfaces de rouleaux sont élastiques.

7. Appareil selon la revendication 6, dans lequel le rapport entre la vitesse linéaire de la surface horizontale (20) au niveau du point où les pierres précieuses passent entre les rouleaux (30a, 30b) et la vitesse linéaire des surfaces de rouleaux en contact correspond à environ 5 :3.

8. Appareil selon les revendications 6 ou 7, configuré de sorte que les pierres précieuses transportées sur la surface horizontale (20) contactent la série de cames (40) avant les rouleaux verticaux (30a, 30b).

9. Appareil selon l'une quelconque des revendications précédentes, comprenant en outre un capteur (52) au niveau de l'emplacement de mesure (50) pour identifier quand une pierre précieuse atteint l'emplacement de mesure, dans lequel le capteur comprend optionnellement un rideau de lumière (52) et est configuré de sorte à arrêter le déplacement de la surface horizontale (20) lorsqu'une pierre précieuse passe à travers le rideau de lumière.

10. Appareil selon la revendication 9, dépendant directement ou indirectement de la revendication 2, dans lequel l'emplacement de mesure (50) comprend en outre un dispositif de détection configuré pour détecter si une seule pierre précieuse ou de multiples pierres précieuses sont présentes au niveau de l'emplacement de mesure, et dans lequel l'appareil est optionnellement configuré de sorte que :
lorsqu'une seule pierre précieuse est détectée au niveau de l'emplacement de mesure, la seule pierre précieuse est retirée du disque (20) ; et
lorsque de multiples pierres précieuses sont détectées au niveau de l'emplacement de mesure, les multiples pierres précieuses restent sur le disque, de sorte à passer de nouveau à travers le dispositif de séparation (40) et le dispositif de décélération et de libération (30a, 30b).

11. Appareil selon la revendication 10, dans lequel la seule pierre précieuse est retirée du disque (20) vers un emplacement de retenue ou de distribution, et/ou dans lequel l'appareil comprend en outre un dispositif de poussée configuré pour pousser une seule pierre précieuse du disque lorsque de multiples pierres précieuses ne sont pas détectées au niveau de l'emplacement de mesure (50), et/ou dans lequel l'appareil comprend en outre un seul rouleau vertical (60) à proximité du bord du disque pour rediriger les pierres précieuses qui sont passées à travers l'emplacement de mesure vers le centre du disque.

12. Appareil selon l'une quelconque des revendications précédentes, comprenant en outre une glissière (90) pour distribuer les pierres précieuses sur la surface horizontale mobile (20).

13. Appareil selon la revendication 12, dans lequel la glissière comprend une paire de rouleaux tournant en sens inverse (92a, 92b) séparés par un espace (94) suffisamment étroit pour empêcher une retombée des pierres précieuses à travers celui-ci, mais suffisamment large pour permettre la retombée de fragments et de copeaux à travers celui-ci, et dans lequel l'espace a optionnellement une largeur comprise entre 0,5 et 2 mm, de préférence à environ 1 mm, et la glissière est optionnellement inclinée vers l'horizontale à un angle compris entre 5 et 20°, de préférence à environ 10°.

14. Appareil selon les revendications 12 ou 13, comprenant en outre un dispositif d'alimentation primaire (80), le dispositif d'alimentation primaire comprenant une courroie de transport et une ou plusieurs surfaces de came (71, 72) configurées pour transférer les pierres précieuses vers la glissière (90) dans une seule file, et comprenant en outre optionnellement un dispositif d'alimentation à trémie (70) comprenant une trémie pour retenir de multiples pierres précieuses, et une paire de rouleaux tournant en sens inverse pour transférer les pierres précieuses de la trémie vers le dispositif d'alimentation primaire.

15. Procédé de transfert de pierres précieuses individuellement vers un emplacement de mesure (50), le procédé comprenant les étapes suivantes :
réception d'une certaine quantité de pierres précieuses ;
transport et support des pierres précieuses vers un emplacement de mesure (50) sur une surface horizontale mobile (20) ;
entraînement de la séparation des pierres précieuses les unes des autres lors de leur transport en contrôlant un trajet suivi par les pierres précieuses ; et
décélération de chaque pierre précieuse au niveau d'un dispositif de décélération et de libération (30a, 30b) de sorte à l'accélérer à l'écart d'une pierre précieuse suivante, ledit dispositif de décélération et de libération comprenant une paire de rouleaux verticaux (30a, 30b) tournant en sens inverse autour d'axes sensiblement verticaux et comportant des surfaces de rouleaux à proximité étroite l'une de l'autre ou se contactant sensiblement l'une autre, et configurées de sorte que les pierres précieuses la surface horizontale (20) passent entre les rouleaux là où les surfaces de rouleaux se contactent l'une l'autre.
